# EUROPEAN PATENT APPLICATION

(11) **EP 4 099 086 A1**
(43) Date of publication of application: **07.12.2022**
(21) Application number: 22176843.5
(22) Date of filing: 01.06.2022
(51) Int. Cl.: G02B 27/01, G02B 5/02

(54) **DISPLAY HEADSET AND DISPLAY SYSTEM**

(30) Priority: 02.06.2021 GB 202107901
(71) Applicant: Codrington, Leon, Molesey, Surrey KT8 1TJ (GB)
(72) Inventor: Codrington, Leon, Molesey, Surrey KT8 1TJ (GB)
(74) Representative: Barker Brettell LLP

(57) **Abstract**

A headset (10) for presenting a virtual reality, augmented reality and/or other mixed reality visual content, comprising a headset body (12) allowing the headset (10) to be worn on a user's head (16) and one or more screens (14, 30) configured to receive a projected image and to display the projected image to the user as virtual reality, augmented reality or other mixed reality visual content.

## Description

### TECHNICAL FIELD

The present invention relates to a headset and to a display system including a headset.

### BACKGROUND

Immersive entertainment is a growing field and virtual reality (VR) headsets are popular gadgets for both passive (e.g. watching television) and active (e.g. playing video games) entertainment.

There are, broadly, two kinds of headset available - those that having their own in-built monitors and processors, and those to which a smartphone is mounted. The Oculus Quest is an example of a headset with an in-built monitor and provides a processor with an operating system to deliver VR content. In other examples, a user can mount their smartphone on a headset such that the smartphone screen is arranged in front of their eyes. They can then load an application that delivers VR content on the smartphone.

In some cases, the headset does not offer any electronic features of its own. The Dodocase P2 is an example of this - the product is formed from cardboard, purchased flat, and the user unfolds the cardboard to assemble the headset. The Dodocase P2 includes two lenses through which the user looks at their smartphone.

In some cases, the smartphone provides the monitor and processor, but the headset also includes electronics. In the Samsung Gear VR headset, for example, the smartphone plugs into the headset via USB-C or micro-USB. The headset includes an inertial measurement unit, a touchpad and a proximity sensor, for example.

Some headsets can be used with external controllers such as handheld joysticks or other controllers or motion sensors to place on the user's body, for example, allowing the user to play video games or enjoy other active content.

Some headsets support augmented reality (AR) as well as/instead of VR content. Augmented reality involves overlaying computer-generated graphics over a view of the real world, as opposed to fully immersing the user in a virtual world (blocking out a view of the real world). AR is growing in popularity too - for example, the art world has embraced AR as a way to showcase art pieces on user's smartphones. One example is the Unreal City exhibition in London, in which sculptures were visible on smartphone screens as if displayed along the real-world Thames river.

Mixed reality (MR) includes AR and includes all other aspects between a real environment and a wholly virtual environment. MR includes augmented virtuality (AV), for example, which merges real-world objects into virtual worlds.

As VR, AR and other MR becomes more popular, VR, AR and other MR-based experiences may appear more and more in public places like cinemas, conferences, sporting events and on airplanes, for example. It may not be desirable for people to use their own smartphones for public consumption of VR/AR/other MR - for example, headsets would need to work with different kinds of smartphone to include everyone.

Allowing the public to use headsets with on-board processors and monitors to experience VR, AR or other MR may lead to damage, loss and theft of the headsets. Each headset may be expensive - this may provoke theft, and damage or loss may be particularly costly.

Headsets that are proposed to use a lens array and/or a focusing screen are known. It is also known to propose to use a screen through which users can see their surroundings while an image can be displayed overlayed on reality, using the screen. In some proposed prior art examples, remote projectors are used to project an image onto a headset. Examples of known proposals for headsets include those shown in DE102016111783 A1, WO2021/091697 A1, US2007/064311 A1, EP3770670 A1, WO97/29822 A1, and US2019/258061 A1. The present invention seeks to address problems with the prior art.

### SUMMARY

An aspect of the present invention provides headset for presenting a virtual reality, augmented reality and/or other mixed reality visual content, comprising:
a headset body allowing the headset to be worn on a user's head;
one or more screens configured to receive a projected image and to display the projected image to the user as virtual reality, augmented reality or other mixed reality visual content.

In embodiments, there is provided a headset for presenting a virtual reality, augmented reality and/or other mixed reality visual content, comprising:
a headset body allowing the headset to be worn on a user's head;
one or more screens configured to receive an optically projected image and to display the optically projected image to the user as virtual reality, augmented reality or other mixed reality visual content.

The screen, or one or the screens, may define a field of view of the headset and wherein the field of view extends into the user's peripheral vision in use.

In one example, a screen may be arranged in front of the user's eyes in use, as a viewing screen to display the projected image to the user.

In a second example, a first screen configured to receive the projected image may be arranged elsewhere on the headset (i.e. not in front of the user's eyes), but may direct (for example, reflect) the projected image to a second, viewing screen arranged in front of the user's eyes in use in order to display the projected image.

The viewing screen may be configured to lie in line with the user's eyes in use, so that the user does not have to angle their eyes up, down, left or right to see an image projected on the screen.

The headset may include more than two screens and the projected image may be reflected more than once to reach a screen that is visible to the user (e.g. a viewing screen).

The headset may not include the source of the projected image. A projector may be provided, decoupled from the headset (i.e. not connected electrically or mechanically to the headset), as described below, to project an image to one or more of the screens.

The headset may be devoid of any electronics that are configured to display an image, and preferably the headset may be devoid of any electronic or electrical components.

The headset may be devoid of on-board electronics configured to display the image. The headset may be 'dumb' or passive, in this respect. The headset may be completely unpowered, in the sense of not being in receipt of electrical power and not comprising any stored energy source.

This makes it cheaper. One situation where this can be an advantage is in circumstances where people may walk off with the headset. If for example one is on an airplane with a headset for AR/VR that is the property of the airline it can be expensive for the airline if passengers walk off with expensive headsets. Much of the expense is associated with the electronics of conventional AR/VR headsets. It can be a public relations problem for airlines to search passengers as they leave to make sure they do not have an expensive headset on them. Better is to have a low-cost headset that can be lost to the airline without costing so much. By having a headset with no, or only cheap, electronics this is feasible. The headset may have no electronic or electrical components, or it may have very cheap components (e.g. earphones, and it will be noted that airlines already give away earphones). Other situations where losing a cheap headset is better than taking care to retrieve expensive headsets include other vehicles (e.g. trains or buses) or theatres or cinemas, or schools.

In situations where the person has a defined seat (e.g. a vehicle such as an aircraft) the person's/passenger's head is in a reasonably well-defined location and this can facilitate the implementation of the invention.

In some embodiments, the headset may include on-board electronics for purposes other than image display - for example, the headset may include speakers. The speakers may be configured to play audio associated with the image displayed on the screen. The speakers may be arranged on the headset such that they are adjacent a user's ears in use.

The headset may be dimensioned such that when the headset is worn, a user wearing glasses can overlay the headset on top of the glasses. The headset body may be configured to attach to eyeglasses, for example.

The headset body may include a head strap that extends behind a user's head in use to secure the headset. The headset body may include a frame with portions that fit behind a user's ears - like typical eyeglasses. The headset body may include a hat.

The one or more screens may be transparent or translucent. This may allow the user to see the 'real world' through the viewing screen. For AR applications, this may allow the user to see the real world as well as the image on the viewing screen.

For AV applications, the screen may not need to be transparent or translucent as images of the real world may be relayed to the headset from a projection source - i.e. the user may not need to see through the screen to see the real world but may be provided with an image of the real world (along with virtual images to provide AV content).

The one or more screens may include a plastics material. The one or more screens may be made from a plastics material. The one or more screens may include glass - for example, may be made from glass.

The viewing screen may define a field of view of the headset and the field of view may extend into the user's peripheral vision in use. The viewing screen may be configured to occupy at least 90 degrees of the user's horizontal field of view. The viewing screen may be configured to occupy at least 100 degrees of the user's horizontal field of view or at least 110 degrees of the user's horizontal field of view, for example.

The viewing screen may have two opposite ends, wherein each end bends such that the field of view extends into the user's peripheral vision on both sides of their head in use.

For VR applications, the user may feel more involved in the content displayed on the screen if they cannot readily see the real world by looking far enough to the left or right. Immersion plays a big part in VR. For AR applications, having the screen in the user's peripheral vision allows the user to experience more AR content across their view of the real world.

The headset may comprise a brim and a front portion, wherein the brim is arranged to extend away from the user's face in use, wherein the front portion is arranged to extend in front of the user's eyes in use, and wherein the front portion comprises the screen or one of the screens.

The headset may comprise a first screen and a second screen, wherein the front portion comprises the second screen and wherein the first screen is mounted on the brim.

The first screen may be mounted on an outer surface of the brim.

The screen or one of the screens may comprise a diffuser. The diffuser may be configured as a transmissive diffuser or a diffuse reflector. The headset may comprise a diffuse white screen, for example. The diffuse white screen may be configured as a diffuse reflector of light projected thereon.

In an example where there is a single screen, the screen may comprise the diffuser. The single screen headset may be configured for rear projection (with the diffuser configured as a transmissive diffuser). The diffuser may be arranged to receive a projection from a projector behind the user (who is wearing the headset) such that the projected light is directed to the diffuser, and then to the user's eyes. For the light to reach the user's eyes - without being blocked by their head - the projection source may be arranged above the user, projecting downwards towards the diffuser and the diffuser may be configured to reflect the light at an angle suitable to direct the light to the user's eyes.

One screen may comprise a combiner. In an example where there are multiple screens, the diffuser may be configured to direct light to the combiner (with the diffuser configured as a diffuse reflector or as a transmissive diffuser).

The headset may comprise a first screen and a second screen, wherein the first screen comprises the diffuser and wherein the second screen comprises a combiner. This arrangement may reduce limitations on user head movements versus prior art headsets that use diffraction gratings (which can have a limited range of angles at which they work). This arrangement may allow for expanded colour gamut in the displayed image versus prior art headsets that use diffraction gratings (which again can have a restricted range of angles for different wavelength of light, and so the images can be colour - distorted).

The diffuser may be mounted on the brim at an angle tilting the diffuser towards the combiner.

The diffuser may be configured to direct light received from a projector to the combiner and the combiner may be configured to direct the light to the user's eyes in use.

The diffuser replaces the need for a smartphone or other display device that is commonly used in prior art headsets. The diffuser preferably avoids colour distortion by not having a viewing angle and wavelength dependent characteristic (such as have diffraction gratings) , and so the images can be in viewed in colour better. The diffuser may form an intermediate image between the projector and the combiner.

The combiner may include a mirror. The combiner may be a mirror. The combiner may be configured to reflect light that arrives at the combiner from the diffuser. The mirror may be a parabolic mirror. The mirror may be concave and arranged on the headset to direct light from the diffuser to the user's eyes, in use.

In the example with multiple screens, the diffuser may be arranged on the headset with at least a portion of the diffuser higher than an uppermost part of the viewing screen when the headset is oriented for use. The diffuser may be arranged upward of the combiner. Projected light may be directed to the diffuser first, which may then direct the light downwards to the combiner. If the diffuser were arranged level with the combiner on the headset, it may block the user's eyes.

In this example, the projection source may be arranged in front of the user in use, to direct light first to the diffuser above the user's head, which is then reflected to the combiner, and reflected again to the user's eyes (to be seen). The projection source may be above the user, forward of their face, for example.

The headset may define a front side and a back side - the front side may be the part of the headset that the user looks at (or through) in use and which may be arranged forward-most on the user's face when worn. Where the headset comprises both a diffuser and a combiner, the diffuser may be arranged on the headset closer to the back side than the front side and the combiner may be arranged closer to the front side than the back side.

The combiner may be tilted to face the diffuser. 'Tilted' here means arranged such that a longitudinal axis of the combiner is not parallel with a longitudinal axis of the headset body. The diffuser may also be tilted, to face the combiner. A longitudinal axis of the diffuser may not be parallel with a longitudinal axis of the headset body. A longitudinal axis of the diffuser may be parallel or substantially parallel to a longitudinal axis of the combiner, for example. A longitudinal axis of the diffuser may be tilted at a lesser angle from a longitudinal axis of the headset body than a longitudinal axis of the combiner, for example. The combiner may be described as an "off-axis" parabolic mirror.

The brim may extend away from the user's face in use, and the front portion may comprise the viewing screen. The brim and front portion may form a visor on the headset. The viewing screen may extend towards the user's face in use - the viewing screen may curve, for example, towards the user's face (i.e. concave from the point of view of the user). The brim may be attached to the front portion at a corner, for example, or the brim and front portion may be integrally formed. The viewing screen may not extend towards the user's face but may extend straight downwards from the brim - perpendicular to the brim, for example. However, to achieve the desired reflection of light into the user's eyes, it is expected that the viewing screen curves towards the user's face.

The brim may have an inner surface and an outer surface - the inner surface may be arranged closer to the user's eyes in use and the outer surface may be further from the user's eyes in use. The outer surface of the brim may form an outer surface of the headset. The screen or one of the screens may be mounted on the outer surface of the brim.

The viewing screen and/or the brim and viewing screen may have a fixed position with respect to the rest of the headset body, or the viewing screen and/or brim and viewing screen may be hinged or otherwise movably connected to the rest of the headset body. For example, the user may be able to put the headset on their head then lower the screen and/or brim and screen to align the screen with their eyes.

In examples with a single screen, the diffuser may be arranged on the front portion. The brim may comprise transparent or translucent material such that light can pass through the brim to the diffuser.

In examples with multiple screens, the diffuser may be arranged on the brim. In use, this may place the diffuser above the user's eyeline. The combiner may be arranged on the front portion. The brim may comprise transparent or translucent material, to allow light to reach the combiner from the diffuser.

For example, the brim may include a transparent or translucent plastics material - this may allow for cheaper manufacture compared with more expensive materials. The headset may comprise non-transparent or translucent materials - for example, card or cardboard - however, part of the brim should be transparent or translucent to allow light to reach the viewing screen.

The diffuser may be configured to receive light from a projector. The diffuser may be configured to direct light received from the projector to the user's eyes, in single screen examples, or to the combiner, in multiple screen examples.

The headset may comprise a lens. The lens may be arranged between the viewing screen and the user's eyes, in use. The lens may be configured to increase the field of view of the user that is occupied by the viewing screen. The headset may comprise a lens for the user's left eye and a lens for the user's right eye. Each lens may comprise a plurality of lens elements.

The headset may comprise a first filter configured to filter light from the screen or one of the screens to be seen by the user's left eye in use and a second filter configured to filter light from the screen or one of the screens to be seen by the user's right eye in use.

The first filter may be configured to filter light from the viewing screen to be seen by the user's left eye in use and the second filter may be configured to filter light from the viewing screen to be seen by the user's right eye in use.

In multiple screen examples, the first and second filters may be configured to filter light from the diffuser in the path to the combiner. The first filter may be configured to filter light from the diffuser to be seen by the user's left eye and the second filter may be configured to filter light from the diffuser to be seen by the user's right eye.

The filters may be arranged on the headset adjacent the lens or lenses, for example.

Another aspect of the present invention provides a display system comprising the headset described above, further comprising: a projector configured to direct light to the headset.

Another aspect of the present invention provides a display system comprising a projector and the headset described above, wherein the projector is configured to direct light to at least one of the one or more screens. For example, the projector may be configured to direct light to the diffuser.

Another aspect of the present invention provides a display system comprising a projector and comprising the headset described above, wherein the projector is configured to direct light to the diffuser and wherein the diffuser is configured to direct light to the combiner. This is in accordance with multiple screen examples.

The display system may further comprise a tracking camera. The tracking camera may preferably be adapted in use to track the position and optionally the direction that a user's head and/or eyes are facing.

The display system may further comprise a controller adapted to modify the image that is projected using an input from the tracking camera relating to the position and direction that the user's head and/or eyes are facing.

The tracking camera may be configured to track motion of the user when the user is wearing the headset. The tracking camera may be configured to track motion of the headset. Motion of the user may include hand gestures. Motion of the headset may include changes of height of the headset - this may indicate that the user is standing or sitting, for example. Motion of the headset may include titling of the headset - this may indicate the user is looking down or up from centre, for example. Motion of the headset may include turning - this may indicate that the user is looking left or right from centre, for example.

The tracking camera may be remote from the headset. The tracking camera may be external - rather than internal - with respect to the headset. The tracking camera may be set up in the room where the entertainment content or other content is presented to the user. The tracking camera may be activated once the user puts on the headset, for example. The tracking camera may be activated (i.e. may start tracking motion of the user and/or headset) automatically once the headset is within range of the tracking camera.

In use, the projector may be ceiling mounted or mounted, for example at a height above 2 metres from floor level. The projector may be arranged to project light downwards towards headsets worn on user's heads. The projector may be located higher than the height of all - or most - people, to achieve the downward projection direction. Ceiling mounting would achieve this effect.

Users may be seated, however, so the requirement for being mounted above human height may not be required, but rather the projector may be mounted above the height of a seated person. This may be above around 1.5 metres from floor level, for example.

Users may be children so the height above which the projector may be mounted in use may be lower - for example, above 1 metre from floor level.

In some examples, the headset may be provided for use in a theatre or cinema environment, or another venue with tiered seating. The projector may be arranged higher than the highest tier of seats. Projectors may be positioned relative to different tiers of seats, to serve those seats, at an appropriate height so as to project downwardly to that tier of seats.

In a cinema, for example, the projector may be mounted above the cinema screen. The user may be able to see the cinema screen and images thereon, and the headset may be configured to display an image, such that the user sees the headset image overlayed on the real world, which includes the image on the cinema screen.

The projector may be mounted behind the user to allow rear projection of an image to the headset.

In an airplane, for example, the projector may be arranged above the height of the seats of the airplane. For example, the projector may be mounted onto the overhead storage - either in front of or behind the user or above the user with the projector tilted to project towards the headset. The projector may be mounted on a seat back, facing the seat behind.

In use, the projector may be wall mounted or otherwise arranged to allow a user wearing the headset to position the headset such that a screen of the one or more screens is positioned at a distance of 0.5 metres to 0.7 metres from the projector. For example, the headset may be positioned at 0.5 metres or 0.6 metres or 0.7 metres from the projector. The distance may be measured from the parts of the projector that emit projection (for example, from a lens of the projector) to one of the one or more screens on the headset.

Depending on the projection optics of the projector, having the headset closer to the projector may improve resolution. This may be the result of more pixels delivering light to one of the screens - for example the diffuser.

The distance between the headset and the projector may be shorter or longer than 0.5 metres to 0.7 metres, but the resolution may be affected.

In use, the tracking camera may be ceiling mounted or mounted at a height above 2 metres from floor level. The tracking camera may be arranged in any of the ways that the projector is described as being arranged, above.

The tracking camera may be mounted to the projector. For example, the tracking camera may be attached to an underside of the projector. The projector may be housed in a housing and the tracking camera may be housed in that housing. The housing may be ceiling mounted in use, for example. The tracking camera may be mounted on the ceiling or otherwise mounted separately from the projector.

The projector may be configured to project light that produces an image for the user's left eye in use in a first mode, and the projector may be configured to project light that produces an image for the user's right eye in use in a second mode.

In this way, the image reaching the user's eyes may be improved, have a wider field of view, and depth may be improved in the image for example. For VR applications where the user should feel immersed in the image they see, the images projected for particular eyes (left or right) may add to the immersive effect.

The projector may be configured to switch between the first mode and the second mode sequentially. Switching quickly between the left eye image and the right eye image may allow the user to view a combination of the left eye and right eye images at the same time. The rate at which the projector switches between the first mode and the second mode may be around 30 fps, for example.

The display system may further comprise an imaging system that renders an image to be displayed at the headset, wherein the projector may be configured to project light based on the image rendered by the imaging system. The imaging system may be configured to render a first image to be seen by the user's left eye in use and a second image to be seen by the user's right eye in use, wherein the projector may be configured to project light for the first image in a first mode and wherein the projector may be configured to project light for the second image in a second mode. The projector may be configured to switch between the first mode and the second mode sequentially.

The imaging system may comprise a processor. The imaging system may comprise a receiver or transceiver configured to receive data from which to form an image for projection. The imaging system may be configured for Wi-Fi communication or other wireless communication to receive image data.

The display system may further comprise a media player. The media player may be configured to play a video file, for example. The projector may be configured to project the image parts of the file played on the media player. As set out above, the headset may comprise a speaker, which may be configured to play the audio of the file played on the media player. Alternatively or additionally, the audio may be played on speakers separate from the headset.

The display system may comprise a games console. The user may wear the headset to view video of a game and may use external controllers (for example, handheld controllers) to play the game. The tracking camera may be configured to track the headset and/or the user's body and may communicate with the games console such that the game can be controlled by movement of the user.

The display system may comprise multiple projectors. The display system may include multiple projectors, each connected to the same processor, imaging system and/or media player, for example. This may be useful in a cinema or theatre or other environment where multiple users - each with a headset - are present. Each projector may be associated with a separate tracking camera.

The imaging system may be configured to render a first image to be seen by the user's left eye in use and a second image to be seen by the user's right eye in use, wherein the projector may be configured to project light for the first image in a first mode and wherein the projector may be configured to project light for the second image in a second mode.

The image system may feed the left and right images to the projector for projection. The image system may feed the left image to the projector and then the right image to the projector, sequentially, and the projector may project the left and right images sequentially. Of course, the sequence may start with either the left or right image, accordingly.

The projector may be configured to switch between the first mode and the second mode sequentially. A controller may cause the projector to switch between the modes. The projector may be configured to switch between the modes at a rate of around 30 fps, for example.

Another aspect of the present invention provides a passenger carrying vehicle having a display system, wherein the display system is positioned proximate a passenger's seat and is adapted to provide the passenger with a virtual reality, augmented reality or other mixed reality content whilst they are seated in their seat.

The passenger carrying vehicle may be an airplane, for example, or a car, bus, train or boat, for example. In an airplane or other vehicle having rows of seats, the projector may be mounted on the back of another passenger's seat which the user is facing - the user may wear the headset and look towards the projector to receive a projected image at the headset, or the projector may be mounted behind the user, for example on the ceiling or the back of their seat, or of a seat further behind them.

In a vehicle having seats arranged facing the front of other seats - for example, trains having groups of four or six seats arranged around a table, for example - the projector may be arranged overhead for users in those seats to receive a projected image at their headset. In this way, other passengers in their seats do not block the projector from the user in the headset.

Another aspect of the present invention provides a method of displaying an image at the headset, the method comprising: projecting an image from a projector to the headset from a distance away from the headset.

The distance may be 0.5 metres, 1 metre, 1.5 metres or 2 metres in front of the headset or may be above the headset. The distance may be in front of or behind the headset - and may be above as well as in front of or behind the headset, to achieve downward projection to the headset. The distance may be in a direction not directly above or in front of the headset - at a diagonal, for example. In the example where the projector is arranged on a seat back - for example in an airplane - the distance between the projector and the headset once the user is seated in their seat may be around 0.5 metres. The height of the projector above the headset may be less than 0.5 metres - for example 0.1 metres or less than 0.1 metres - where the projector is on a seat back and the user is sitting in a seat behind the seat having the projector.

The projector may be configured to project upwards to the headset (for example, the projector may be arranged on the floor); however, parts of the headset may interfere with a projected image reaching the viewing screen if the projection source is lower than the headset. It may be more comfortable for the user to have the diffuser above their head - for example - rather than below their head, which may be the placement suitable for upward projection.

The headset may be lighter for the user to wear on their face compared with a headset having on-board electronics for displaying an image, or a headset that supports a smartphone.

In addition, the headset may be cheaper to manufacture. The headset may be cheaper and easier to repair or replace. Without needing to use a smartphone, the headset does not need to conform with a particular smartphone shape or size or smartphone manufacturer, and therefore is a more inclusive product.

Headsets may have other applications outside of entertainment, such as providing a head-up display (HUD) in avionics - positioned in a pilot's line of sight. Headsets may also be useful in manufacturing, providing a manufacturing guide or instructions to the wearer. Headsets may be useful in displaying information to surgeons during a surgical procedure, for example.

In some embodiments, there is provided a method of using the headset according to the above to present an image to a user wearing the headset on their head.

In some embodiments, there is provided a method of using a display system according to the above to present an image to a user wearing the headset on their head.

### DETAILED DESCRIPTION

Examples, which should not be construed as limiting, are shown in the figures, in which:
Figure 1 shows a schematic cross-sectional side view of a headset according to embodiments, worn on a person's face;
Figure 2 shows a schematic front view of the headset on a person's face according to embodiments;
Figure 3 shows a schematic side view of the headset according to an example, worn on a person's face;
Figure 4 shows a schematic front view of the headset on a person's face according to examples;
Figure 5 shows a schematic side view of the headset according to examples, worn on a person's face;
Figure 6 shows the headset and a projector according to an example;
Figure 7 shows an imaging system according to an example; and
Figure 8 shows a ray trace from the projector to parts of the headset, according to an example.

Embodiments of the present invention are described by way of example below.

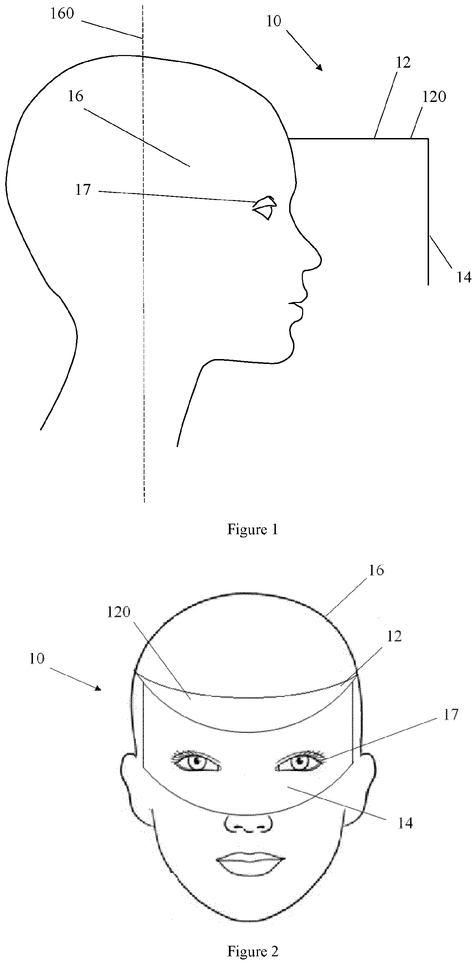

Figure 1 shows a headset 10, comprising a headset body 12 and a viewing screen 14.

The headset 10 is shown worn on a user's face 16. The headset body 12 may comprise a frame that rests on the user's ears in use, for example. The headset body 12 may comprise a strap or other attachment to hold the headset 10 on the user's face 16, which may go around the back of the head, may include a headband or may include a chin strap, for example. For simplicity, figure 1 does not show a particular way in which the headset 10 is rested or attached on the user's face 16.

The headset body 12 may comprise a brim 120 arranged to extend away from the user's face 16 in use, as shown in figure 1. The headset 10 may have the appearance of a visor. This brim 120 may be arranged with respect to the rest of the headset body 12 such that it extends in a direction substantially perpendicular to a craniocaudal axis 160 through the user's head, in use. The longitudinal axis 160 is shown in figure 1 and the headset body brim 120 is shown extending perpendicularly away from the user's face 16. The brim 120 may extend at a different angle; however, extending perpendicular to axis 160 may provide a compact headset 10.

The viewing screen 14 may extend from the brim 120. The screen 14 may be curved so as to wrap around the user's head. The screen 14 may be concave. The screen 14 may be attached to the brim 120 at a first end. The screen 14 and headset body 12 (for example the brim 120) may be integrally formed. The headset body 12 (for example the brim 120) may curve to form the screen 14. The curve of the screen 14 may cause a second end of the screen 14 to point towards the user's face 16 in use as shown in figure 1.

The concave screen 14 may be arranged to direct light into the user's eyes. Light may be projected from in front of the user to form an image on the screen 14 that the user can see. The screen 14 may comprise a transmissive diffuser, so that an image optically projected on the exterior of the screen 14 can be seen by the user at the interior face of the screen 14. In some embodiments the image may be optically projected downwards through the brim 120, and the screen 14 may be configured as a diffuse reflector to form an image in front of the user. For example, the brim 120 may include transparent or translucent material to allow the light through to the viewing screen 14.

In some embodiments the screen on which an image is formed by the projector is flat, simplifying focusing at the screen from the point of view of the projector. In some embodiments a lens may be provided between each eye of the user and the screen. The lenses may increase the apparent focal distance to the image at the screen, and/or increase the apparent field of view occupied by the screen.

Figure 2 shows a front view of the headset 10. The viewing screen 14 may be curved such that the screen 14 enters the user's peripheral vision in use. This may allow a wider field of view than if the screen did not curve into the user's peripheral vision.

The screen 14 may have a length (across the viewing screen 14 left to right) of 200mm-300mm for example. The screen 14 may have a height (from top to bottom of the viewing screen 14) of between 150mm and 200mm, for example. The height may be constant across the length of the viewing screen 14 or the screen 14 may taper - decreasing in height away from the centre, for example.

The headset 10 may include padding to protect the user's forehead, bride of the nose, chin or other parts of the user's face 16 from contact with the screen 14 and/or for comfort of the user.

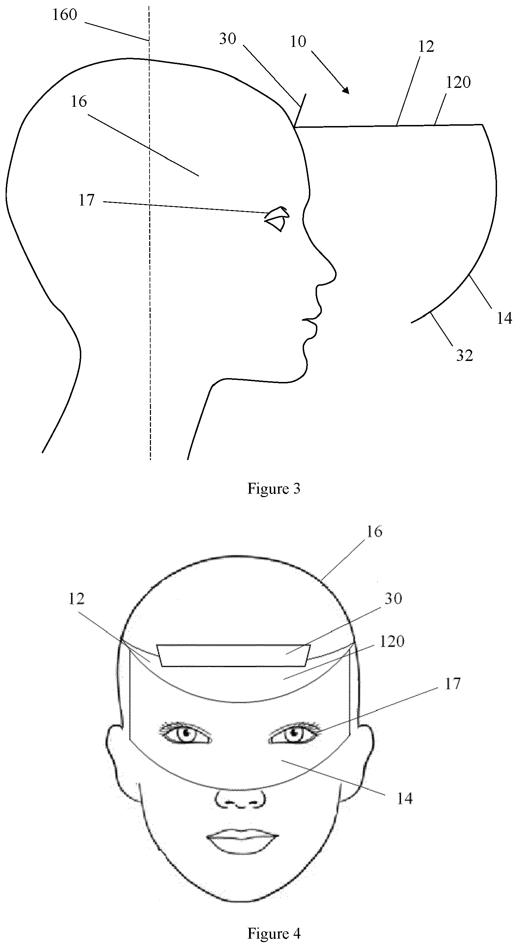

Figure 3 shows the headset 10 including a pair of first screen 30 and a second (viewing) screen 14. The viewing screen 14 may comprise a combiner 32. The first screen 30 may be a reflector, for example a specular reflector or a diffuse reflector. The screen 30 may be a white or grey diffuse reflector, for example. The first screen 30 is shown arranged on the headset body 12 above the user's eyes 17. This position prevents a projection from a projector being blocked by other parts of the headset 10. A projector (not shown) may be configured to project an image on the screen from in front of the user, and the screen 30 may reflect the image onto the viewing screen 14. In embodiments in which the screen 30 is a specular reflector, the viewing screen 14 may comprise a diffuse reflector. In embodiments in which the screen 30 is a diffuse reflector, the viewing screen 14 may comprise a reflecting lens that forms an image of the screen 30 for the user to view.

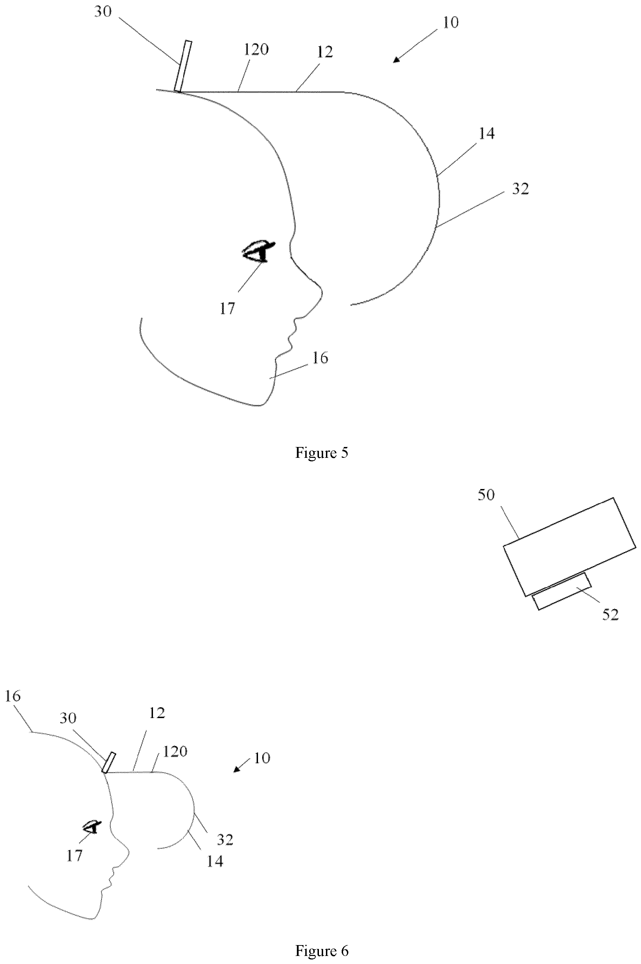

If the user is sitting down, for example in an auditorium, having the screen 30 above their head 16 may prevent people in the rows in front from blocking a projection to the screen 30. This arrangement is shown in figure 5. This may also be the location of the screen 30 where rear projection is used to project light to the headset 10 - this way, the user's head 16 does not block the projection from behind.

The screen 30 may be configured to direct a projected image to the combiner 32 in the same way as described with reference to figure 3. The combiner 32 may be configured to direct the light of the projected image to the user's eyes 17.

The brim 120 may include a transparent or translucent material or an opening or gap such that light can pass through the brim 120 between the screen 30 and the combiner 32.

Figure 4 shows a front view of the headset 10 including the screen 30. The screen 30 is shown tilted with respect to axis 160 in figure 3 - in figure 4 the screen 30 is tilted towards the viewing screen 14. In this way, the screen 30 is configured to reflect light from a projection source in front of the user 16 towards the viewing screen 14. In examples, the screen 30 may be curved to reflect light in the direction of the viewing screen 14 - the screen 30 may be both tilted and curved in some examples.

The tilt of the screen 30 with respect to the brim 120 may be adjustable (for example, the screen 30 may be hingedly or otherwise movably connected to the headset body 12) - this may allow the headset 10 to be adjusted based on the height and/or angle of the projection source with respect to the user. The screen 30 may be at a fixed angle with respect to the rest of the headset 10 to ensure that the screen 30 and the combiner 32 are correctly positioned with respect to one another.

Figure 5 shows the screen 30 arranged higher on the user's face 16 - the viewing screen 14 may have a greater height than in the example of figure 3, in order to be in front of the user's eyes 17 in use. This example - as stated above - may be preferable for rear projection, or where the user is going to be seated in an auditorium for example, so that other people do not block light from the projection source to the screen 30.

In the case of rear projection (where the projection source is located behind the user 16), the screen 30 may not be a reflecting screen but may instead be configured to allow light therethrough and may be configured to guide projected light to the viewing screen 14.

The screen 30 may have a height of between 20mm-30mm, for example. The screen 30 may have a height substantially equal to the diameter of a human eye 17, which is around 1 inch or 25mm or 26mm. The screen 30 may be larger in height when positioned above the user's head in use as in figure 5 - for example, 40mm or 50mm.

The screen 30 may be positioned towards an end of the brim 120 or the screen 30 may be positioned between the ends of the brim 120 on the brim 120 - as shown in figure 6.

The screen 30 may be mounted above the brim 120 (i.e. raised from the brim 120) such that a base of the screen 30 is not in contact with the brim 120. This may prevent the projected image from being directed into a join between the screen 30 and the brim 120 and potentially being lost (i.e. not reflected to the viewing screen 14).

The screen 30 may be configured to display an image projected onto it by a projection source (not shown in figure 6). By way of the combiner 32, the image at the screen 30 may be visible to the user wearing the headset 10.

The combiner 32 may be a curved combiner. The combiner 32 may be a semi-reflective mirror. In this way, the user may be able to see the real world through the mirror/screen 14 as well as seeing light from the screen 30.

In single screen examples, the viewing screen 14 may be semi-reflective such that the real world can be seen through the viewing screen 14.

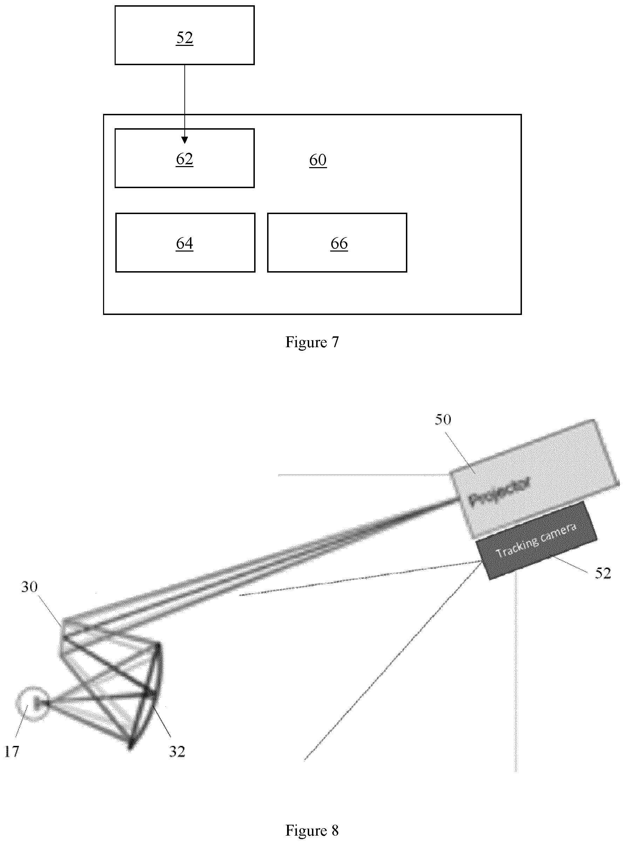

Figure 6 shows a projector 50 configured to project the image to be viewed at the headset 10. In Figure 8, a ray trace from the projector 50 to the screen 30 is shown.

Figure 6 is not to scale but merely represents that the projector 50 projects downwards towards the headset 10.

Figure 6 also shows a tracking camera 52. The tracking camera 52 is shown beneath the projector 50 but may be arranged differently with respect to the projector 50, in reality. For example, the tracking camera 52 may be arranged above the projector 50 or to one side of the projector 50. For ease of installation, the tracking camera may be attached to the projector 50 - the tracking camera 52 and the projector 50 may be arranged in the same housing, for example.

The tracking camera 52 may be configured to perform video tracking by locating the headset 10 using a camera. The tracking camera 52 may be configured to track the headset 10 - left, right, up and down motion of the headset 10, for example. This movement may indicate that the user is turning their head 16.

The tracking camera 52 may be communicatively coupled with an imaging system 60. The imaging system may include a processor 52 configured to receive information from the tracking camera 52.

The tracking camera 52 may feed images directly to the processor 62. The tracking camera 52 may include its own processor, may perform processing at the tracking camera 52 and may feed processed information about the current orientation of the headset 10, change in orientation of the headset 10 or speed of motion of the headset 10, for example, or other characteristics of the headset's motion to the imaging system's processor 62.

The tracking camera 52 may be configured to track a particular point or collection of points on the headset 10. The processor 62 may be configured to monitor how the points move over time and may adjust the projected image accordingly.

Figure 7 shows the processor 62, which may be configured to adjust the projection being projected by the projector 50 based on information from the tracking camera 52. The imaging system 60 may comprise a controller 66 operable to control parts of the imaging system 60 and/or the projector 50 and/or the tracking camera 52. The controller 66 may perform control operations based on information from the tracking camera 52 and/or the processor 62.

The controller 66 may be configured to rotate or tilt the projector 50, for example, or the tracking camera 52.

The processor 62 may be arranged in a housing with the projector 50 and/or tracking camera 52, for example, or may be separately located. The processor 62 is not located on the headset 10, which is 'dumb' with respect to producing an image.

The controller 66 may be arranged in a housing with the projector 50 and/or tracking camera 52, for example, or may be separately located. The controller 66 is not located on the headset 10.

The imaging system 60 may include a media player 64 and the projector 50 may be configured to project an image based on what is played by the media player 64. The controller 66 may be configured to play, pause and/or stop content playing on the media player 64. The controller 66 may be configured to turn the projector on or off - this may be based on content playing on the media player 64.

The imaging system 60 may be configured to generate the image for projection. The image may comprise an image of the real world. The image may comprise digital information. The image may comprise both an image of the real world and digital information - for example in AV applications.

The processor 62 may be configured to render an image based on the orientation of the headset 10 as detected by the tracking camera 52, for example.

The imaging system 60 may be configured to cause the projector 50 to project a first image and subsequently switch to projecting a second image, wherein the first image is for the user's left eye and the second image is for the user's right eye. The headset 10 may include one or more filters. The headset 10 may comprise a first filter and a second filter to filter the projected image for viewing by the left and right eyes, respectively. The filters may be arranged at the screen 14, between the combiner 32 and the user's eyes 17, or may be otherwise positioned on the headset 10. The filters may be configured to to allow the light from the screen 30 to reach the combiner 32 unchanged, then to filter the light from the combiner 32 to the user's eyes 17, for example. The light between the screen 30 and the combiner 32 may be filtered, and the light from the combiner 32 may then proceed to the user's eyes 17. The light between the projector 50 and the screen 30 may be filtered, for example.

The headset 10 may include one or more lenses (which may be in addition to the filters). The one or more lenses may be arranged between the screen 30 and the combiner 32, for example. In single screen examples, the one or more lenses may be arranged closer to the user's eyes 17 than the viewing screen 14 in use. The headset 10 may be configured such that light from the projection source (for example, the projector 50) passes through the brim 120 to the viewing screen 14, then the light is reflected from the viewing screen 14 through the one or more lenses to the user's eyes 17.

The user may wear the headset 10 in a room containing multiple projectors 50 - for example, an art gallery that the user walks around and visits different projectors 50 to receive different projected images. The tracking camera 52 may be configured to identify when the user exits a space that may be served by the associated projector 50 (for example, walks away from the projector 50 or turns their back to the projector 50, for example). More than one tracking camera 52 and/or processor 62 may be communicatively coupled such that more than one projector 50 can work together to provide an image to the user. For example, a projector 50 that was previously behind the user may be configured to start projecting to the user once the user turns to face the projector 50. A tracking camera 52 may identify that a headset 10 has left a space covered by a first projector 50 and may be configured to inform a processor 62 - for example - such that another processor 52 can receive information that the headset 10 is arriving in a space covered by a second projector 50 and can trigger the second projector 50 to project an image to the headset 10.

360-degree experiences (for example, virtual reality applications) may use multiple projectors 50 such that the headset 10 receives a projected image from a projector 50 irrespective of the direction they are facing. Each projector 50 may have its own tracking camera 52 and the tracking cameras 52 may be communicatively coupled with one or more processors 62 - the processors 32 may communicate information to one or more controllers 66 such that the projectors 50 correctly project an image to the headset 10 based on the direction that the user is facing.

For example, two projectors 50 may be used to give the user a 360-degree experience. Where the screen 14 extends into the user's peripheral vision, the user may be able to view a 180-degree image from a single projector 50. If the user wants to see beyond that 180-degree field of view, then a second projector 50 covering the remaining 180-degrees of a 360-degree field of view may be used. In one example, the user may stand between a pair of projectors 50 to experience projected content - one 'projector 50 providing 180-degrees of image and one projector 50 providing the other 180-degrees of image. Of course, more projectors 50 may be implemented and each may provide a smaller section of a full 360-degree image (for example). Four projectors 50 may each provide a 90-degree section of a 360-degree image, for example. In other examples, only a 180-degree image may be desired and projectors 50 may provide other sized sections of the image. A different breadth of image may be desired and the number of projectors 50 may be selected accordingly.

The projector 50 may be movably mounted such that the projector 50 can move. The tracking camera 52 may be used to indicate to the processor 32 motion of the headset 10 and the controller 66 may move the projector 50 accordingly, for example. In this way, the same projector 50 can provide an image to the headset 10 even if the user moves out of the original space covered by the projector 50, by moving to cover the new space. For example, the projector 50 may be gimballed or otherwise rotatable about its mount (for example, ceiling mount).

Although specific examples have been described, these are not intended to limit the scope of the invention, which should be determined with reference to the accompanying claims.

## Claims

1. A headset for presenting a virtual reality, augmented reality and/or other mixed reality visual content, comprising:
a headset body allowing the headset to be worn on a user's head;
one or more screens configured to receive a projected image and to display the projected image to the user as virtual reality, augmented reality or other mixed reality visual content.

2. The headset of claim 1, wherein the headset comprises a first screen and a second screen, wherein the first screen comprises a diffuser and wherein the second screen comprises a combiner, wherein the headset is devoid of any electronics that are configured to display an image, and preferably wherein the headset is devoid of any electronic or electrical components.

3. The headset of claim 1 or claim 2, wherein the screen, or one or the screens, defines a field of view of the headset and wherein the field of view extends into the user's peripheral vision in use.

4. The headset of any preceding claim, comprising a brim and a front portion, wherein the brim is arranged to extend away from the user's face in use, wherein the front portion is arranged to extend in front of the user's eyes in use, and wherein the front portion comprises the screen or one of the screens.

5. The headset of claim 4, wherein the front portion comprises the second screen and wherein the first screen is mounted on the brim, and optionally wherein the first screen is mounted on an outer surface of the brim.

6. The headset of any preceding claim, wherein: -
(i) there is no diffraction grating, and/or
(ii) wherein the screen or one of the screens comprises a viewing screen that defines a field of view of the headset extends into the user's peripheral vision in use, the viewing screen being configured to occupy at least 90 degrees of the user's horizontal field of view, or least 100 degrees of the user's horizontal field of view, or at least 110 degrees of the user's horizontal field of view, and optionally wherein the viewing screen has two opposite ends, and wherein each end is bent or angled such that the field of view extends into the user's peripheral vision on both sides of their head in use.

7. The headset of claim 2, or of any preceding claim as it depends directly or indirectly from claim 2, wherein the diffuser is mounted on the brim at an angle tilting the diffuser towards the combiner, and/or
wherein the diffuser is configured to direct light received from a projector to the combiner and wherein the combiner is configured to direct the light to the user's eyes in use.

8. The headset of any preceding claim, further comprising a first filter configured to filter light from the screen or one of the screens to be seen by the user's left eye in use and a second filter configured to filter light from the screen or one of the screens to be seen by the user's right eye in use.

9. A display system comprising the headset of any preceding claim, further comprising:
a projector configured to direct light to the headset.

10. A display system comprising a projector and comprising the headset of claim 2 or claim 7, or any preceding claim as it depends from claim 2 or from claim 7, claim wherein the projector is configured to direct light to the diffuser and optionally wherein the diffuser is configured to direct the light to the combiner.

11. The display system according to claim 9 or claim 10, further comprising a tracking camera, wherein the tracking camera is preferably adapted in use to track the position and optionally the direction that a user's head and/or eyes are facing, and optionally further comprising a controller adapted to modify the image that is projected using an input from the tracking camera relating to the position and direction that the user's head and/or eyes are facing.

12. The display system according to any one of claims 9 to 11, wherein in use the projector is wall mounted or otherwise arranged to allow a user wearing the headset to position the headset such that a screen of the one or more screens is positioned at a distance of 0.5m to 0.7m from the projector and/or wherein the tracking camera is mounted to the projector, and/or wherein the projector is configured to project light that produces an image for the user's left eye in use in a first mode, and wherein the projector is configured to project light that produces an image for the user's right eye in use in a second mode, and optionally wherein the projector is configured to switch between the first mode and the second mode sequentially.

13. The display system of any one of claims 9 to 12, further comprising an imaging system that renders an image to be displayed at the headset, wherein the projector is configured to project light based on the image rendered by the imaging system, and optionally wherein the imaging system is configured to render a first image to be seen by the user's left eye in use and a second image to be seen by the user's right eye in use, wherein the projector is configured to project light for the first image in a first mode and wherein the projector is configured to project light for the second image in a second mode, and optionally wherein the projector is configured to switch between the first mode and the second mode sequentially.

14. A passenger carrying vehicle having a display system according to any preceding system claim, wherein the display system is positioned proximate a passenger's seat and is adapted to provide the passenger with a virtual reality, augmented reality or other mixed reality content whilst they are seated in their seat.

15. A method of displaying an image at a headset, the headset according to any of claims 1-8, or the system of any of claims 9 to 13, the method comprising:
projecting an image from a projector separate from the headset, to the headset, from a distance away from the headset.
